# EUROPÄISCHE PATENTANMELDUNG

(11) **EP 2 789 260 A1**
(43) Veröffentlichungstag der Anmeldung: **15.10.2014**
(21) Anmeldenummer: 14000136.3
(22) Anmeldetag: 15.01.2014
(51) Int. Cl.: A46B 5/02, A47J 43/28, A21C 9/04

(54) **Vorrichtung zum Bestreichen von Flächen mit einem flüssigen oder pastösen Medium**

(30) Priorität: 09.04.2013 DE 202013003256 U
(71) Anmelder: GEFU-Küchenboss GmbH & Co. KG, 59889 Eslohe (DE)
(72) Erfinder: Schillheim, Rudolf, 59889 Eslohe (DE)
(74) Vertreter: Ostriga Sonnet Wirths & Vorwerk

(57) **Zusammenfassung**

Dargestellt und beschrieben ist eine Vorrichtung zum Bestreichen von Flächen mit einem flüssigen oder pastösen Medium, insbesondere von Backblechen und -formen sowie von zum Backen, Braten oder Grillen vorgesehenen Produkten - nachfolgend Backpinsel genannt - mit einem länglichen Griffteil, der einseitig mit Auftragsborsten versehen ist.

Aufgabe der Erfindung ist es, eine neue Vorrichtung zum Bestreichen von Flächen zu schaffen, dessen Handhabung deutlich verbessert ist.

Die Lösung dieser Aufgabe ergibt sich dadurch, dass das Griffteil zwei voneinander beabstandete Auflagebereiche aufweist, zwischen denen ein von einer Auflagefläche distanzierter Griffbereich ausgebildet ist, und wonach der andere freie, mit Auftragsborsten versehene Endbereich von einer Auflagefläche einen Abstand aufweist.

## Beschreibung

Vorrichtung zum Bestreichen von Flächen mit einem flüssigen oder pastösen Medium, insbesondere von Backblechen und -formen sowie von zum Backen, Braten oder Grillen vorgesehenen Produkten - nachfolgend Backpinsel genannt - mit einem länglichen Griffteil, der einseitig mit Auftragsborsten versehen ist.

Aus der DE 10 2010 038 824 B4 ist beispielsweise ein Back-Pinsel zum Bestreichen von Back-Formen und/oder Backblechen mit einem Trenn-Mittel bzw. Medium und/oder zum Bestreichen von Teiglingen direkt mit einer Flüssigkeit bzw. einem Medium bekannt. Nachteilig an diesem bekannten Backpinsel ist seine nicht zufriedenstellende Handhabung.

Der Erfindung liegt daher die Aufgabe zugrunde, eine neue Vorrichtung zum Bestreichen von Flächen zu schaffen, dessen Handhabung deutlich verbessert ist.

Die Lösung dieser Aufgabe ergibt sich aus den Merkmalen des Anspruchs 1, insbesondere den Merkmalen des Kennzeichenteils, wonach das Griffteil zwei voneinander beabstandete Auflagebereiche aufweist, zwischen denen ein von einer Auflagefläche distanzierter Griffbereich ausgebildet ist, und wonach der andere freie, mit Auftragsborsten versehene Endbereich von einer Auflagefläche einen Abstand aufweist.

Der erfindungsgemäße Backpinsel hat zwei handhabungstechnische Vorteile. Zum einen ist er aufgrund des zwischen den beiden Auflagebereichen ausgebildeten, von der Auflagefläche distanzierten Griffbereichs ergonomisch insofern vorteilhaft, da der Backpinsel auf sehr einfache Weise von einer Auflagefläche ergriffen werden kann. Zum anderen wird durch die beabstandet von einer Auflagefläche angeordneten Auftragsborsten beim Ablegen des Backpinsels auf eine Auflagefläche ein Verschmutzen derselben zuverlässig verhindert.

Vorzugsweise weist das Griffteil einen Auflagebereich inmitten des Griffteils und einen Auflagebereich an einem freien Endbereich auf.

Eine vorteilhafte Ausführungsform der Erfindung zeichnet sich des Weiteren dadurch aus, dass das Griffteil des Backpinsels einen wellenförmigen Verlauf aufweist, wodurch sich zusätzlich ergonomische und designtechnische Vorteile ergeben.

Eine besonders bevorzugte Ausführungsform ist dadurch gekennzeichnet, dass der mittige Auflagebereich auftragsborstenseitig mit einer an der Auflagefläche anliegenden Stützeinrichtung versehen ist. Dadurch wird auf einfache Weise sichergestellt, dass - auch für den Fall, dass an den Auftragsborsten eine relativ große und schwere Menge eines Mediums (z.B. Schokolade) anhaftet - ein "Kippen" des Backpinsels und damit ein Verschmutzen der Auflagefläche zuverlässig verhindert wird.

Letztlich weist eine besondere Ausführungsform der Erfindung zwischen den Auftragsborsten und dem Griffteil von der Auflagefläche wegweisend eine vorzugsweise als lineare Erhebung ausgebildete Halteeinrichtung auf, die als Abrutschsicherung beim Anstellen des Backpinsels an einen Topf, Schüssel oder dergleichen dient.

Weitere Vorteile der Erfindung ergeben sich aus der nachfolgenden Beschreibung eines Ausführungsbeispiels. Es zeigen:
Fig. 1 eine Draufsicht einer Vorrichtung zum Bestreichen von Flächen und
Fig. 2 eine Seitenansicht einer Vorrichtung gemäß Figur 1.

In den Zeichnungen ist eine Vorrichtung zum Bestreichen von Flächen mit einem flüssigen oder pastösen Medium - nachfolgend Backpinsel genannt - insgesamt mit der Bezugsziffer 10 bezeichnet.

Der Backpinsel 10 weist ein Griffteil 11 und Auftragsborsten 12 auf, wobei die Auftragsborsten mittels einer Zwinge 13 am Griffteil 11 befestigt werden.

Am anderen Ende ist das Griffteil 11 mit einer Öse 14 versehen, die zum Aufhängen dient.

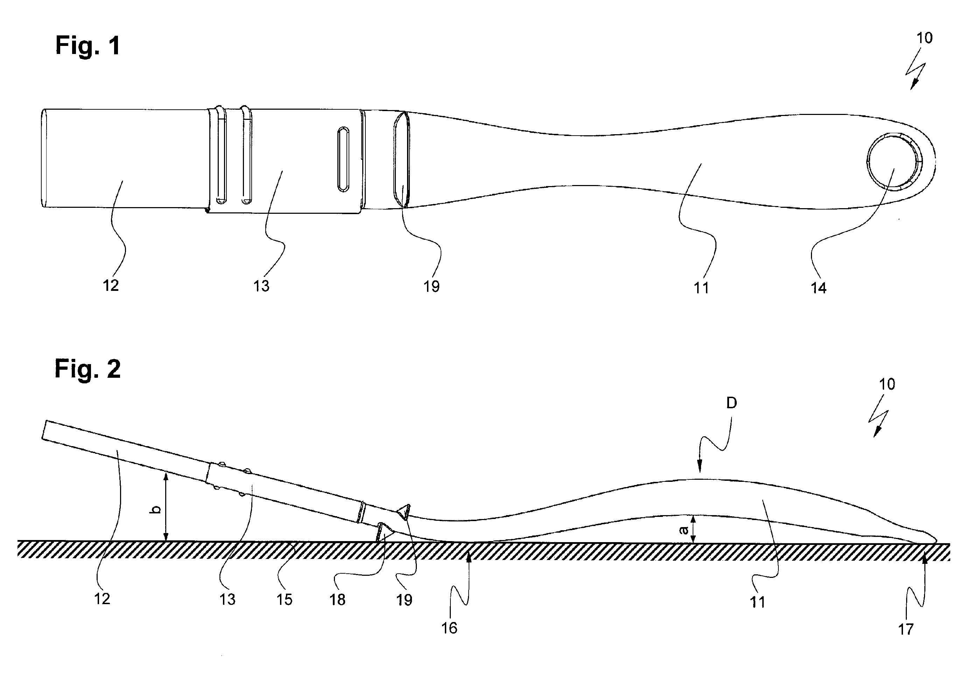

In der Figur 2 ist der "wellenförmige" Verlauf des Griffteils dargestellt. Darüber hinaus ist in der Figur 2, bei der der Backpinsel 10 auf einer Auflagefläche 15 liegt, zu erkennen, dass der Backpinsel 10 mit zwei beabstandeten Auflagebereichen 16 und 17 versehen ist. Während der Auflagebereich 17 an dem ösenseitigen Endbereich des Griffteils 11 angeordnet ist, liegt der Auflagebereich 16 inmitten des Griffteils 11. Zwischen beiden Auflagebereichen 16 und 17 ist aufgrund der Wellenform des Griffteils 11 mittig ein distanzierter Griffbereich D mit einem Abstand a zur Auflagefläche 15 vorhanden, der dem einfachen Ergreifen bzw. Untergreifen des Backpinsels 10 bei der Lagerung desselben auf einer Auflagefläche 15 dient.

Auftragsborstenseitig ist darüber hinaus das Griffteil 11 ebenfalls so gebogen, dass sich die mit der Zwinge 13 am Griffteil 11 befestigten Auftragsborsten 12 in einem deutlichen Abstand b von der Auflagefläche 15 befinden, wodurch ein Verschmutzen der Auflagefläche 15 zuverlässig verhindert wird.

Bei der in Fig. 2 dargestellten Ausführungsform weist zur zusätzlichen Sicherung der vorbeschriebenen Lage des Backpinsels 10 das Griffteil 11 zwischen der Zwinge 13 und dem Auflagebereich 16 eine leistenförmige Stützeinrichtung 18 auf, mit der ein Kippen des Backpinsels 10 und damit ein Verschmutzen der Auflagefläche 15 durch die Auftragsborsten 12 zuverlässig verhindert wird.

Des Weiteren ist der Backpinsel 10 an seiner Oberseite zwischen der Zwinge 13 und dem Auflagebereich 16 mit einer als lineare Erhebung ausgebildete Halteeinrichtung 19 versehen, die als Abrutschsicherung beim Anstellen des Backpinsels 10 an einen Topf dient.

Abschließend sei darauf hingewiesen, dass sich die Erfindung grundsätzlich auch auf die Verwendung der Vorrichtung zum Bestreichen von Flächen im Zusammenhang mit dem Anstreichen und Lackieren von Flächen sowie für Kunstmalerei bezieht.

### Bezugszeichenliste:

- 10: Vorrichtung (Backpinsel)
- 11: Griffteil
- 12: Auftragsborsten
- 13: Zwinge
- 14: Öse
- 15: Auflagefläche
- 16: Auflagebereich
- 17: Auflagebereich
- 18: Stützeinrichtung
- 19: Halteeinrichtung

- a: Abstand
- b: Abstand
- D: distanzierter Griffbereich

## Patentansprüche

1. Vorrichtung zum Bestreichen von Flächen mit einem flüssigen oder pastösen Medium, insbesondere von Backblechen und - formen sowie von zum Backen, Braten oder Grillen vorgesehenen Produkten - nachfolgend Backpinsel genannt - mit einem länglichen Griffteil, der einseitig mit Auftragsborsten versehen ist, **dadurch gekennzeichnet, dass** das Griffteil (11) zwei voneinander beabstandete Auflagebereiche (16, 17) aufweist, zwischen denen ein von einer Auflagefläche (15) distanzierter Griffbereich (D) ausgebildet ist, und dass der andere freie, mit Auftragsborsten (12) versehene Endbereich von einer Auflagefläche (15) einen Abstand aufweist.

2. Backpinsel nach Anspruch 1, **dadurch gekennzeichnet, dass** das Griffteil (11) einen Auflagebereich (16) inmitten des Griffteils (11) und einen Auflagebereich (17) an einem freien Endbereich aufweist.

3. Backpinsel nach einem der vorangehenden Ansprüche, **dadurch gekennzeichnet, dass** das Griffteil (11) einen wellenförmigen Verlauf aufweist.

4. Backpinsel nach einem der vorangehenden Ansprüche, **dadurch gekennzeichnet, dass** der mittige Auflagebereich (16) auftragsborstenseitig mit einer an der Auflagefläche (15) anliegenden Stützeinrichtung (18) versehen ist.

5. Backpinsel nach einem der vorangehenden Ansprüche, **dadurch gekennzeichnet, dass** zwischen den Auftragsborsten (12) und dem Griffteil (11) von der Auflagefläche (15) wegweisend eine vorzugsweise als lineare Erhebung ausgebildete Halteeinrichtung (19) vorhanden ist, die als Abrutschsicherung beim Anstellen des Backpinsels (10) an einen Topf, Schüssel oder dergleichen dient.
